# EUROPEAN PATENT APPLICATION

(11) **EP 4 822 419 A1**
(43) Date of publication of application: **14.10.2026**
(21) Application number: 25169195.2
(22) Date of filing: 08.04.2025
(51) Int. Cl.: G02B 21/00, G02B 21/36

(54) **ILLUMINATION DEVICE FOR A LIGHT SHEET MICROSCOPE**

(71) Applicant: Viventis Microscopy Sàrl, 1015 Lausanne (CH)
(72) Inventor: Strnad, Petr, 35578 Wetzlar (DE)
(74) Representative: Schaumburg und Partner Patentanwälte mbB

(57) **Abstract**

An illumination device (102) for a light sheet microscope (102) comprises a light source (110) configured to emit a light beam (LB), a beam steering device (112) arranged in a beam path of the light beam (LB), and a controller (120). The controller (120) is configured to control the beam steering device (112) to translate the light beam (LB) transversely to its propagation direction during a scanning period to execute each of at least two beam scans (BS1, BS2, BS3) within a planar illumination area (116) which at least partially overlaps between the at least two beam scans (BS1, BS2, BS3), while keeping a spatial orientation of the light beam (LB) within the planar illumination area (116) fixed during each beam scan (BS1, BS2, BS3). The controller (120) is configured to control the beam steering device (112) to rotate the light beam (LB) within the planar illumination area (116) between the at least two beam scans (BS1, BS2, BS3).

## Description

### Technical field

The invention relates to an illumination device for a light sheet microscope. The invention further relates to a light sheet microscope comprising an illumination device, and a method for illuminating a sample with a light sheet.

### Background

Selective plane illumination microscopy (SPIM) is an advanced imaging technique that illuminates an approximately planar area of a sample with a thin, laterally extended illumination light distribution which is commonly referred to as a light sheet. In a widely used configuration, the illuminated sample area is imaged by means of an optical detection system whose optical axis is orthogonal to the optical axis of the illumination system or to the illuminated sample area. SPIM minimizes phototoxic effects and enables high-resolution, three-dimensional imaging of living specimens over extended periods. SPIM offers high optical sectioning efficiency and reduces unwanted background fluorescence, making it especially suitable for biological research and developmental biology.

A light sheet can be generated in two fundamentally different ways: In a static approach, a cylindrical lens or similar optical element shapes a beam into a thin, laterally extended sheet-like light distribution that illuminates the sample. In contrast, according to a dynamic approach, a focused Gaussian or Bessel shaped light beam or other light beam is rapidly scanned over the sample to create an equivalent of a static light sheet. In the latter approach, the scanning motion must cover the area to be illuminated within the exposure time of a detector to ensure that the scanned light appears as a continuous sheet rather than a time-resolved moving beam.

A common problem with SPIM configurations is the occurrence of various artefacts on both the illumination side and the detection side. In particular, light sheet illumination that is orthogonal to the detection can produce high-contrast shadow artefacts in the detected image. Since the light sheet is typically irradiated into the sample from a fixed direction, opaque or highly scattering structures within the sample can block or redirect the illumination light. The attenuation and scattering of the illumination within the sample results in progressive image degradation as the light propagates through the sample.

As an approach to solve the above problem a configuration has been proposed which directs two oppositely propagating light sheets into the sample. By illuminating the sample from opposite directions, attenuation and shadowing can be reduced. Another approach proposes to pivot the statically generated light sheet in order to realize different irradiation angles within the illuminated sample plane.

Both approaches have been addressed in US9134521B2 and by Jan Huisken and Didier Y. R. Stainier, "Even fluorescence excitation by multidirectional selective plane illumination microscopy (mSPIM)", Optic Letters, Vo. 32, No. 17 (2017). Here, the focus plane of an imaging objective is illuminated alternately by two static light sheets which propagate from opposite directions into the sample. Furthermore, a scan unit having a resonant mirror is provided which can be used to pivot a static light sheet in the illuminated sample area.

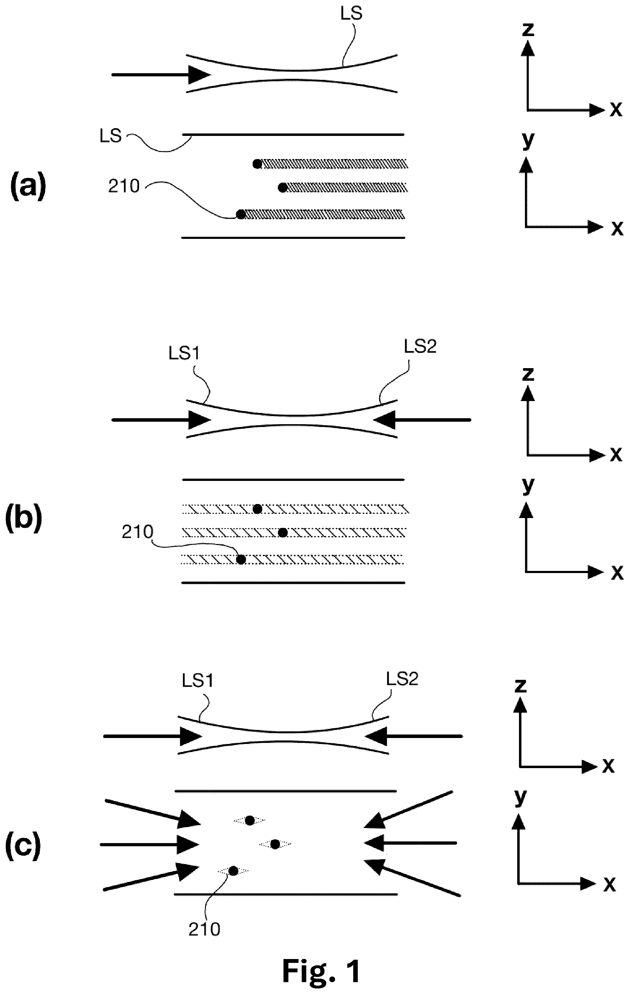

Figure 1 illustrates the above approaches which are applied to reduce shadow artefacts in SPIM. In Figure 1, an xyz coordinate system is indicated to denote directions along which a sample is illuminated with a light sheet LS and the illuminated sample is imaged on a detector, respectively. In each situation illustrated in Figure 1, the light sheet LS is statically created for example by means of a cylindrical lens (not shown).

In Figure 1(a), it is assumed that the light sheet LS propagates along the x-axis from left to right and is blocked by opaque sample structures 210 on its path through the sample. The upper and lower parts of Figure 1(a) show the light sheet LS in a cross section (x-z) and a plan view (x-y), respectively. As shown in the lower plan view of Figure 1(a), shadows are cast downstream of the opaque sample structures 210. These shadows are visible as striped artefacts (shown as densely shaded areas) in the resulting image which is detected in the direction of the z-axis.

Figure 1(b) illustrates a situation in which two light sheets LS1, LS2 are irradiated from opposite directions into the sample. As illustrated in Figure 1(b) by less densely shaded areas, such dual illumination reduces the occurrence of shadows downstream of the opaque sample structures 210 compared to single illumination as shown in Figure 1(a).

Figure 1(c) shows a dual light sheet illumination similar to Figure 1(b). However, in addition to Figure 1(b), the light sheets LS1, LS2 are pivoted to change the directions along which the light sheets LS1, LS2 are irradiated into the sample. By pivoting the light sheets LS1, LS2, the occurrence of shadows downstream of the opaque sample structures 210 can be further reduced since the change in the angles of incidence allows better illumination of sample areas that would otherwise be in shadow.

Although the conventional approaches explained above can be used to reduce shadow artefacts, they still have disadvantages in terms of the flexibility and efficiency of light sheet illumination.

### Summary

It is an object to provide an illumination device, a light sheet microscope, and a method for illuminating a sample which allows for a flexible and efficient reduction of shadow artefacts.

The afore-mentioned object is achieved by the subject-matter of the independent claims. Further embodiments are defined in the dependent claims and the following description.

An illumination device for a light sheet microscope comprises a light source configured to emit a light beam, and a beam steering device arranged in a beam path of the light beam. The illumination device includes a controller which is configured to control the beam steering device to translate the light beam transversely to its propagation direction during a scanning period to execute each of at least two beam scans within a planar illumination area which at least partially overlaps between the at least two beam scans, while keeping a spatial orientation of the light beam within the planar illumination area fixed during each beam scan. The controller is configured to control the beam steering device to rotate the light beam within the planar illumination area for changing its spatial orientation between the at least two beam scans.

In contrast to the conventional approach mentioned above, in which a static light sheet is generated by a cylindrical lens and then pivoted as a whole, the illumination device proposed herein involves a combined and in particular synchronized scanning and pivoting motion of a light beam in order to achieve pivoting of a dynamically generated light sheet and thus reduce shadow artefacts. For dynamic light sheet generation, the beam steering device performs - in particular in respect of a detection time period or a detector exposure time - a rapid beam scan during a predetermined scanning period. The latter may be defined as the time it takes for the light beam to perform a complete forward movement across the plane to be illuminated. Alternatively, the scanning period may indicate the time it takes for the light beam to perform a complete back-and-forth movement across the illumination area.

A rotating or pivoting motion of the light beam is achieved by causing the beam steering device to change the spatial orientation of the light beam between successive beam scans while keeping it fixed during each beam scan. The spatial orientation mentioned above refers to a direction along which the light beam propagates through the sample. Accordingly, fixing the spatial orientation of the light beam during a single beam scan means that the light beam does not alter its propagation direction, apart from a substantially parallel translation that is caused by scanning the light beam to create the light sheet. On the other hand, a change of the spatial orientation between successive beam scans involves a change of the direction along which the light beam propagates to ensure that at least two different beam scans are executed with a different propagation direction, resulting in rotation of the light sheet between the beam scans.

Using a scanning light sheet provides greater flexibility to the microscope system compared to an approach operating with a static light sheet. For example, it allows to freely adjust a scanning range and to concentrate power into a region of interest (ROI). Furthermore, it is possible to visualize and measure beam profiles when the light beam is, so to speak, parked in a field of view (FOV). For instance, a confocal detection system on a camera chip - which is also called rolling shutter detection - can be used which is only possible when using a scanning light sheet and turning off beam pivoting which can be easily achieved by appropriate control of the beam steering device.

Due to the scanning approach presented herein, the illumination device may be configured to illuminate the sample simultaneously from opposite or different directions, wherein overlap and interference of the counter-propagating light beams can be avoided by spatially offsetting the light beams. This, however, is only an example, and the illumination device may also be used for sequential illumination.

Compared to the conventional solutions mentioned above, the illumination device can be implemented as a compact system. There is no need for additional optical elements such as a cylindrical lens specifically designed for light sheet shaping.

According to an embodiment, the controller is configured to control the beam steering device to execute the at least two beam scans within one detector exposure time. By performing a certain number of beam scans within one detector exposure time, the light sheet is rotated a corresponding number of times within the detector exposure time, resulting in a pivoting movement of the light sheet in the planar sample area to be illuminated. The number of beam scans performed in one detector exposure time can be flexibly selected to achieve the desired shadow reduction and imaging speed.

The controller may be configured to control the beam steering device to set, for each beam scan, an illumination angle, at which the light beam propagates relative to an illumination reference axis, to a predetermined rotation angle and then translate the light beam during the scanning period at the predetermined rotation angle transversely to its propagation direction. The illumination reference axis may be an optical axis defined by optical elements which are configured to direct the light beam into the sample, e.g. by an illumination objective. The specific illumination angle may be set at an appropriate timing to ensure that each beam scan is executed at a different illumination angle. For example, the illumination angle may be adjusted at the beginning or at the end of the scanning period assigned to the respective beam scan, in particular at a scanning position of the beam scan where the light beam is not located in the FOV of the optical detection system.

The controller may be configured to control the beam steering device to rotate the light beam relative to an illumination reference axis in an angular range of ± 5° for changing the spatial orientation of the light beam between the beam scans. However, depending on the specific requirements, the angular range may also be larger such as ± 18, ± 16°, ± 14°, ± 12, ± 10°, ± 8°, ± 6° or smaller such as ± 4°, or ± 2°. For a less opaque sample, a relatively small angular range may be sufficient, whereas for a more opaque sample, a larger angular range may be required.

According to an embodiment, the beam steering device comprises at least a first scanner and a second scanner arranged at a distance from each other along the beam path of the light beam. The controller may be configured to control the second scanner to execute each beam scan. The controller may further be configured to control either the first scanner or, as an alternative, both the first scanner and the second scanner in synchronization with each other to rotate the light beam for changing its spatial orientation between the beam scans.

Each of the first and second scanners may be configured to be controlled in terms of its scanning rate. This makes it easy to flexibly synchronize the combined scanning and pivoting operation as required.

Each of the first and second scanners may be a galvanometric scanner. Such a galvanometric scanner may include one or more mirrors driven by an electric current. It can be used for precisely scanning the light beam across the illumination area while simultaneously adjusting its pivoting angle. In this respect, the proposed configuration differs from the above-mentioned conventional approaches which use resonant scanners rather than galvanometric scanners for light sheet pivoting. A resonant scanner typically operates with a high-speed oscillating mirror tuned to a specific resonance frequency. Therefore, a resonant scanner is capable of oscillating at very high frequencies, e.g. at 8 kHz. However, the resonant frequency is fixed and cannot be synchronized with light sheet generation by scanning. For this reason, it has only be used in combination with static light sheet. Furthermore, a galvanometric non resonant scanner is configured to smoothly operate with minimal vibration which is beneficial for high-resolution imaging.

In principle, it may be envisaged to use, on the one hand, a galvanometric scanner for dynamic light sheet generation and, on the other hand, a resonant scanner for rapidly pivoting the light sheet. However, for the following reason, the proposed embodiment uses one or more galvanometric scanners for both dynamically generating and pivoting the light sheet. It is difficult to synchronize a galvanometric scanner and a resonant scanner in one short detector exposure time. Using both types of scanners may lead to interference between the two non-coordinated beam movements. If the frequency for beam pivoting is close to the frequency for light sheet generation, an inhomogeneous distribution of the pivoting angles across the field of view is observed. A combination of scanning and pivoting will be possible only if very different frequencies are used which will lead to very long exposure times. This problem can be avoided when one or more non-resonant and synchronized galvanometric scanners are used for both scanning and pivoting as presented in this application.

According to an embodiment, the illumination device uses a scan lens, wherein the second scanner is arranged in a focus plane of the scan lens. Such a configuration makes it easy to synchronize light beam scanning and changing the illumination angle between individual beam scans within the same detector exposure time so that a homogenous distribution of the pivoting angles across the field of view can be achieved. The second galvanometric scanner is positioned at the focus plane of the scan lens while the first galvanometric scanner is arranged at a distance from the second galvanometric scanner. Movement of the second galvanometric scanner alone achieves scanning of the light beam in the focus plane to generate the light sheet whereas the combined movement of the two galvanometric scanners pivots the light beam in the focus plane.

According to another aspect, a light sheet microscope is provided which comprises an illumination device as described herein.

According to an embodiment, the light sheet microscope comprises a detector and an optical system configured to image the planar illumination area being illuminated by the light beam onto the detector. The control of the illumination device may be configured to control the beam steering device to execute each beam scan by translating the light beam across a field of view of the optical system.

According to another aspect, a method for illuminating a sample with the light sheet is provided. The method comprises the following steps: emitting a light beam; controlling a beam steering device to translate the light beam transversely to its propagation direction to execute each of at least two beam scans within an illumination area which at least partially overlaps between the at least two beam scans, while keeping a spatial orientation of the light beam within the planar illumination area fixed during each beam scan; and controlling the beam steering device to rotate the light beam, i.e. to change its special orientation, within the planar illumination area between the at least two beam scans.

### Short Description of the Figures

Hereinafter, embodiments are described referring to the drawings, wherein:
- Figure 1: is a schematic diagram illustrating shadow artefacts occurring in static light sheet illumination and conventional approaches to reduce shadow artefacts;
- Figure 2: is a schematic diagram showing a light sheet microscope comprising an illumination device to an embodiment;
- Figure 3: is a schematic diagram illustrating an embodiment providing for a combined and synchronized scanning and pivoting motion of a light beam in comparison to a pivoting motion of a static light sheet; and
- Figure 4: is a schematic diagram illustrating a beam steering device according to different embodiments.

### Detailed Description of the Figures

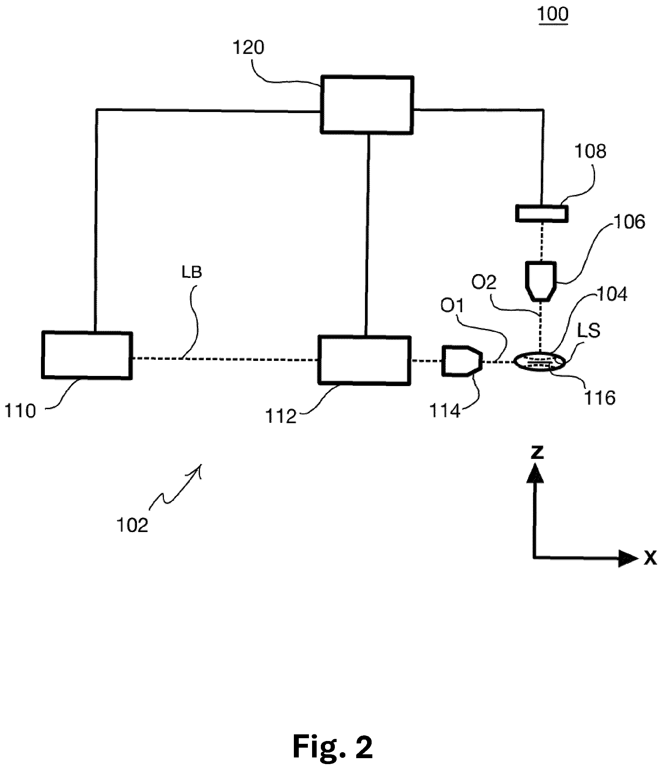

Figure 2 shows a light sheet microscope 100 having an illumination device 102 according to an embodiment. The light sheet microscope 100 operates in accordance with a SPIM configuration in which a sample 104 is illuminated along a first optical axis O1, and a sample 104 is imaged along a second optical axis O2 that is perpendicular to the first optical axis O1 by means of an optical system 106 onto a detector 108, for example a camera. Figure 2 shows only those components of the light sheet microscope 100 that contribute to an understanding of the embodiment, and the light sheet microscope 100 may include additional components not shown in Figure 1.

The illumination device 102 comprises a light source 110 that emits a light beam LB propagating along an optical axis and a beam steering device 112 that is arranged in a beam path of the light beam LB. The illumination device 102 may further comprise an illumination objective 114 which is arranged downstream of the beam steering device 112 and faces the sample 104 to be illuminated. As further explained below, the illumination device 102 is configured to dynamically convert the light beam LB into a light sheet LS which is projected into the sample 104. With reference to Figure 2, the light beam LB propagates along an x-axis defined by the first optical axis O1, while the sample 104 is imaged along a z-axis defined by the second optical axis O2. Accordingly, in the example shown in Figure 1, the light sheet LS defines a planar illumination area 116 that extends along the x-axis and a y-axis perpendicular thereto. It goes without saying that the illumination area 116 is only an approximation of a plane, but not a plane in a strictly mathematical sense.

In order to image the planar illumination area 116 of the sample onto the detector 108, light sheet microscope 100 may comprise the optical system 106 arranged along the second optical axis O2 including a detection objective facing the sample. It should be noted that the SPIM configuration shown in Figure 1, with the optical axes O1, O2 for illumination and detection perpendicular to each other, is only an example. The solution disclosed herein can also be advantageously applied to configurations in which the optical axes defining the directions of illumination and detection are not perpendicular to each other but are still susceptible to the shadow artefacts that are to be avoided.

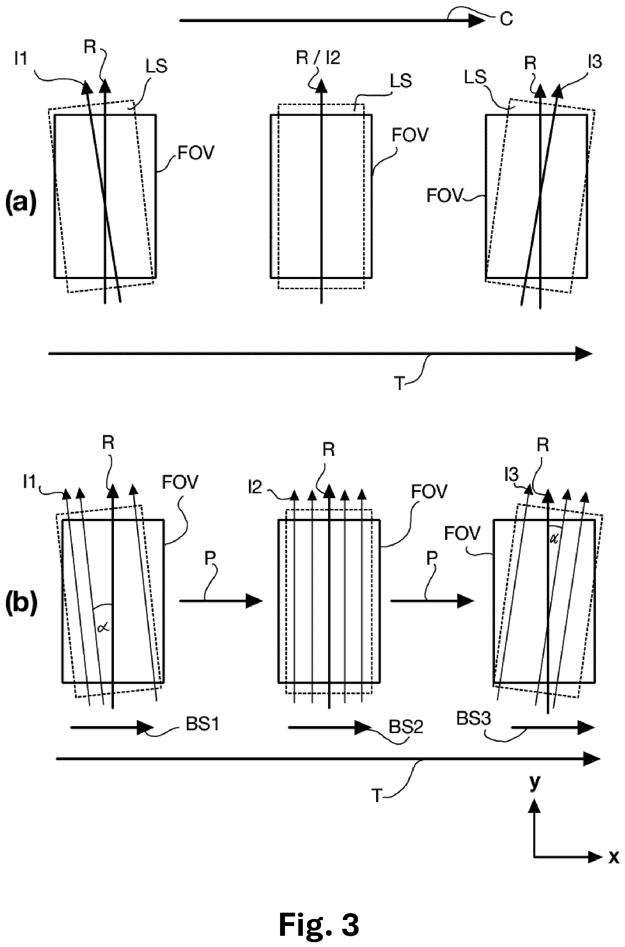

A controller 120 may be configured to control an overall operation of the light sheet microscope 100. In particular, the controller 120 is configured to control the illumination device 102 to execute several beam scans as illustrated in Figure 3.

In Figure 3, a conventional approach using a static light sheet is compared to the present embodiment which provides for a combined and synchronized scanning/pivoting motion of the light beam LB to reduce shadow artefacts. Figures 3(a) refers to the conventional approach, while Figure 3(b) illustrates the embodiment as disclosed herein.

Figure 3(a) is a plan view showing a statically generated light sheet LS, that is continuously pivoted to reduce shadow artefacts, relative to a field of view FOV at three successive points in time within one full detector exposure time T indicated by a horizontal arrow T. Figure 3(a) shows three exemplary directions I1, I2, I3 along which the light sheet LS successively propagates relative to an illumination reference axis R within the detector exposure time T. Thus, in the example shown in Figure 3(a), the light sheet LS propagates at a single point in time within the first third of the detector exposure time T along the direction I1. Accordingly, the light sheet propagates at a single point in time within the second third of the exposure T along the direction I2, and it propagates at a single point in time within the third of the exposure T along the direction I3. In fact, the light sheet LS is continuously pivoted over the detection exposure time T as illustrated in Figure 3(a) by an arrow C.

Figure 3(b) relating to the present embodiment corresponds to Figure 3(a) in terms of the field of view FOV to be illuminated, the detector exposure time T as well as the three successive points in time and the three different light propagation directions I1, I2, I3. In contrast to the comparative example shown in Figure 3(a), the embodiment of Figure 3(b) provides for a dynamic light sheet generation. For this purpose, the controller 120 is configured to cause the beam steering device 112 to translate the light beam LB transversely to its propagation direction I1, I2, and I3, respectively, during a scanning period to execute a beam scan. Within the detector exposure time T, a total of three beam scans, denoted BS1, BS2, BS3 in Fig. 3(b), are performed in the planar illumination area 116, wherein the illumination area 116 at least partially overlaps between the beam scans BS1, BS2, BS3.

The controller 120 is further configured to keep the respective propagation direction I1, I2, I3 of the light beam LB fixed during each beam scan BS1, BS2, BS3. By moving the light beam LB across the planar illumination area 116 while keeping the light propagation direction I1, I2, I3 fixed, the dynamic light sheet LS is created in each beam scan BS1, BS2, BS3. Thus, the spatial orientation of the light beam LB within the planar illumination area 116 is determined by the respective propagation direction I1, I2, I3 of the light beam LB which remains constant, apart from a parallel translation of the light beam LB, during each beam scan BS1, BS2, BS3. In Figure 3(b), the scanning motion of the pencil-shaped light beam LB during each scanning period is illustrated by a number of parallel arrows which represent in their entirety the dynamically created light sheet LS.

The controller 120 is further configured to control the beam steering device 112 to pivot the light beam LB within the planar illumination area 116 between the beam scans BS1, BS2, BS3 as indicated by arrows P. In the specific example shown in Figure 3(b), the illumination direction is changed between the first and second beam scans BS1, BS2 from I1 to I2, and the illumination direction is changed between the second to the third beam scans BS2, BS3 from I2 to I3. This change of spatial orientation of the dynamically created light sheet in the three beam scans BS1, BS2, BS3 over the detector exposure time T ensures efficient shadow reduction.

The controller 120 may cause the beam steering device 112 to set, for each beam scan BS1, BS2, BS3, an illumination angle, at which the light beam LB propagates relative to the illumination reference axis R to a predetermined rotation angle α. The adjustment of the rotation angle α may the performed at the beginning of the next beam scan to be executed or at the end of the last beam scan executed. In order to create the light sheet LS in each beam scan, the light beam LB is then translated during the scanning period at the adjusted rotation angle α.

The controller 120 may further be configured to provide a predetermined angular range in which the light beam LB is rotated relative to the illumination reference axis R in order to change its spatial orientation between the beam scans. For example, the light beam LB may be pivoted by ± 5° relative to the illumination reference axis R between the first beam scan and the last beam scan.

In the specific the example shown in Figure 3(b), three beam scans BS1, BS2, BS3 are executed during one detector exposure time T. Accordingly, the light sheet LS takes three different pivot states relative to the illumination reference axis R during a complete detector exposure time T. Furthermore, the scanning period of each beam scan is approximately one-sixth of the detector exposure time T, assumed that the scanning period is defined as the time it takes for the light beam LB to perform a forward movement across the illumination area 116, or the scanning period is approximately one-third of the detector exposure time T, assumed that the scanning period is defined as the time it takes for light beam LB to perform a complete back-and-forth movement across the illumination area 116. In any case, executing three beam scans within one detector exposure time is to be understood merely as an example. The number of beam scans and thus the number of different pivoting states of the light sheet within one detector exposure time may be another, provided that it is greater than or equal to two.

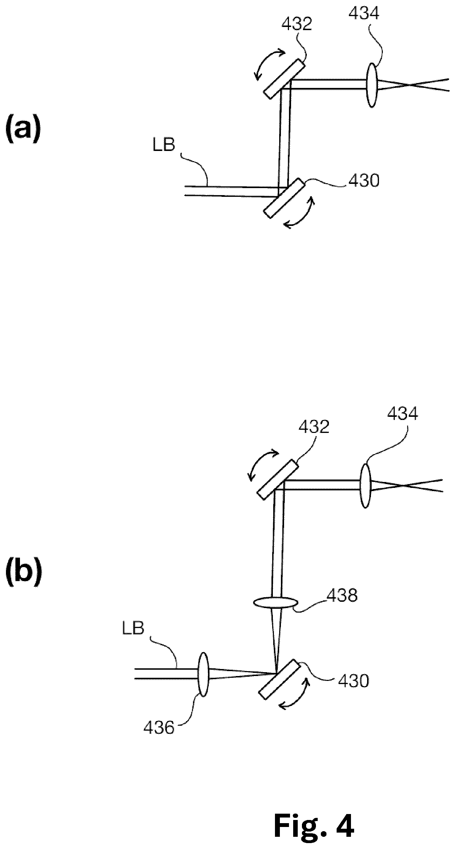

Figure 4 shows exemplary configurations of the beam steering device 112.

In a first embodiment shown in Figure 4(a), the beam steering device 112 comprises a first scanner 430 and a second scanner 432 which are arranged at a distance from each other along the beam path of the light beam LB. The beam steering device 112 further includes a scan lens 434 which is located downstream of the second scanner 432. The light beam LB emitted from the light source 110 falls onto the first scanner 430 which reflects the light beam LB towards the second scanner 432. The second scanner 432 is arranged in a focus plane of the scan lens 434 and reflects the light beam LB towards the scan lens 434.

Each of the first and second scanners 430, 432 may be formed from a galvanometric scanner which is configured to precisely control a position of the light beam LB by reflecting it by means of one or more tiltable mirrors. For example, the controller 120 may be configured to control the second scanner 432 to execute each beam scan BS1, BS2, BS3 as illustrated in Figure 3(b) in order to dynamically generate the light sheet LS. In this example, the controller 120 may further be configured to control both the first and second scanners 430, 432 in synchronization with each other to change the spatial orientation of the light beam LB between the successive beam scans.

In a second embodiment shown in Figure 4(b), the first scanner 430 and the second scanner 432 are controlled in a different way. As in the first embodiment, the second scanner 432 is controlled to perform the beam scans BS1, BS2, BS3 for generating the light sheet LS. However, only the first scanner 430 is used to rotate the light beam LB between the beam scans. Compared to Figure 4(a), the embodiment shown in Figure 4(b) includes additional optical elements such as lens 436 upstream of the first scanner 430 and a lens 438 between the first scanner 430 and the second scanner 432.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: light sheet microscope
- 102: illumination device
- 104: sample
- 106: optical system
- 108: detector
- 110: light source
- 112: beam steering device
- 114: illumination objective
- 116: illumination area
- 120: controller
- 210: opaque sample structure
- 430, 432: scanner
- 434: scan lens
- 436: lens
- 438: lens
- LS: light sheet
- LB: light beam
- BS1, BS2, BS3: beam scan
- I1, I2, I3: light propagation direction
- R: illumination reference axis
- T: detector exposure time
- O1: first optical axis
- O2: second optical axis
- FOV: field of view

## Claims

1. An illumination device (102) for a light sheet microscope (100), comprising:
a light source (110) configured to emit a light beam (LB),
a beam steering device (112) arranged in a beam path of the light beam (LB), and
a controller (120),
wherein the controller (120) is configured to control the beam steering device (112) to translate the light beam (LB) transversely to its propagation direction during a scanning period to execute each of at least two beam scans (BS1, BS2, BS3) within a planar illumination area (116) which at least partially overlaps between the at least two beam scans (BS1, BS2, BS3), while keeping a spatial orientation of the light beam (LB) within the planar illumination area (116) fixed during each beam scan, and
wherein the controller (120) is configured to control the beam steering device (112) to rotate the light beam (LB) within the planar illumination area (116) between the at least two beam scans (BS1, BS2, BS3).

2. The illumination device (102) according to claim 1, wherein the controller (120) is configured to control the beam steering device (112) to execute the at least two beam scans (BS1, BS2, BS3) within one detector exposure time (T).

3. The illumination device (102) according to any one of the preceding claims, wherein the controller (120) is configured to control the beam steering device (112) to set, for each beam scan (BS1, BS2, BS3), an illumination angle, at which the light beam (LB) propagates relative to an illumination reference axis (R), to a predetermined rotation angle (α) and then translate the light beam (LB) during the scanning period at the predetermined rotation angle (α) transversely to its propagation direction.

4. The illumination device (102) according to any one of the preceding claims, wherein the controller (120) is configured to control the beam steering device (112) to rotate the light beam (LB) relative to an illumination reference axis (R) in an angular range of ± 5° for changing the spatial orientation of the light beam (LB) between the beam scans (BS1, BS2, BS3).

5. The illumination device (102) according to any one of the preceding claims,
wherein the beam steering device (112) comprises at least a first scanner (430) and a second scanner (432) arranged at a distance from each other along the beam path of the light beam (LB),
wherein the controller (120) is configured to control the second scanner (432) to execute each beam scan (BS1, BS2, BS3), and
wherein the controller (120) is configured to control either the first scanner (430) or the first scanner (430) and the second scanner (432) in synchronization with each other to rotate the light beam (LB) for changing its spatial orientation between the beam scans (BS1, BS2, BS3).

6. The illumination device (102) according to claim 5, wherein each of the first and second scanners (430, 432) is configured to be controlled in terms of its scanning rate.

7. The illumination device (102) according to claim 5 or 6, wherein each of the first and second scanners (430, 432) is a galvanometric scanner.

8. The illumination device (102) according to any one of the preceding claims, comprising a scan lens (434), wherein the second scanner (432) is arranged in a focus plane of the scan lens (434).

9. A light sheet microscope (100) comprising an illumination device (102) according to any one of the preceding claims.

10. The light sheet microscope (100) according to claim 9, comprising a detector (108) and an optical system (106) configured to image the planar illumination area (116) being illuminated by the light beam (LB) onto the detector (108), wherein the controller (120) of the illumination device (102) is configured to control the beam steering device (112) to execute each beam scan (BS1, BS2, BS3) by translating the light beam (LB) across a field of view (FOV) of the optical system (108).

11. A method for illuminating a sample (104) with a light sheet (LS), comprising following steps:
emitting a light beam (LB),
controlling a beam steering device (112) to translate the light beam (LB) transversely to its propagation direction to execute each of at least two beam scans (BS1, BS2, BS3) within a planar illumination area (116) which at least partially overlaps between the at least two beam scans (BS1, BS2, BS3), while keeping a spatial orientation of the light beam (LB) within the planar illumination area fixed during each beam scan (BS1, BS2, BS3), and
controlling the beam steering device (112) to rotate the light beam (LB) within the planar illumination area (116) between the at least two beam scans (BS1, BS2, BS3).
